# EUROPEAN PATENT APPLICATION

(11) **EP 4 609 929 A1**
(43) Date of publication of application: **03.09.2025**
(21) Application number: 24386023.6
(22) Date of filing: 01.03.2024
(51) Int. Cl.: A63F 13/65, A63F 13/52, A63F 13/67, G06T 15/04

(54) **A SYSTEM FOR GENERATING MAPPING DATA TO BE APPLIED TO A SURFACE OF A VIRTUAL ELEMENT, AND A METHOD THEREOF**

(71) Applicant: Sony Interactive Entertainment Inc., Tokyo 108-0075 (JP)
(72) Inventor: Pilataki Manika, Maria, London, W1F 7LP (GB); Cockram, Philip, London, W1F 7LP (GB)
(74) Representative: D Young & Co LLP

(57) **Abstract**

A system for generating mapping data to be applied to a surface of a virtual element comprises: receiving circuitry configured to receive an instruction to render the virtual element; determining circuitry configured to determine, in response to the instruction being received, whether the virtual element has mapping data associated therewith; obtaining circuitry configured to obtain the mapping data if the virtual element has mapping data associated therewith, or else obtain object data indicating a type of object and/or material corresponding to the virtual element; generating circuitry comprising one or more generating models which generate, based on the obtained object data, the mapping data to be applied to the surface of the virtual element; and applying circuitry configured to apply the obtained or generated mapping data to the surface of the virtual element.

## Description

### Field of Invention

The present invention relates to a system for generating mapping data to be applied to a surface of a virtual element, and a method thereof.

### Background

Texture maps, normal maps and occlusion maps to be applied to in-game objects/terrain are typically large in terms of file size, which may result in a slow retrieval of such maps from memory at runtime, and thus lead to less immersive gameplay experience due to an increase in lag experienced by users of the video game, a decrease in frame rate, and the like.

The present invention seeks to alleviate or mitigate this issue.

### Summary of the Invention

This disclosure is defined by claim 1. Further respective aspects and features of the invention are defined in the appended claims.

Embodiments of the present invention will now be described by way of example with reference to the accompanying drawings, in which:
- Figure 1 schematically illustrates an entertainment system operable as a system according to embodiments of the present description;
- Figure 2 schematically illustrates a system according to embodiments of the present description; and
- Figure 3 schematically illustrates a method according to embodiments of the present description.

### Description of the Embodiments

A system for generating mapping data to be applied to a surface of a virtual element and then applying that data to a surface, and a method thereof are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, an entertainment system may be operable as a system for generating mapping data to be applied to a surface of a virtual element.

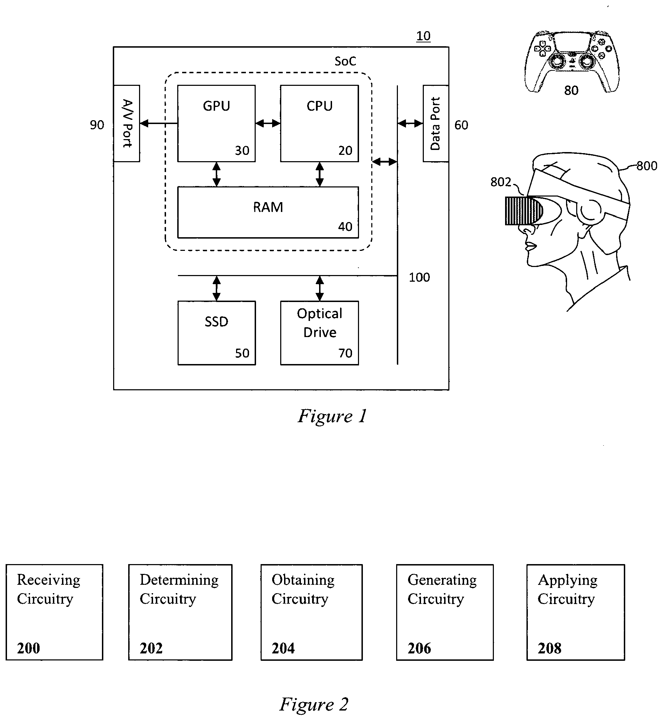

Referring to Figure 1, an example of an entertainment system 10 is a computer or console.

The entertainment system 10 comprises a central processor 20. This may be a single or multi core processor, for example comprising eight cores. The entertainment system also comprises a graphical processing unit or GPU 30. The GPU can be physically separate to the CPU, or integrated with the CPU as a system on a chip (SoC).

The entertainment device also comprises RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet ^{®} port, Wi-Fi ^{®} port, Bluetooth ^{®} port or similar, as appropriate. It may also optionally receive data via an optical drive 70.

Interaction with the system is typically provided using one or more handheld controllers 80.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display `HMD' 802, worn by a user 800.

As mentioned previously, texture maps, normal maps and occlusion maps to be applied to in-game objects/terrain are typically large in terms of file size, which may result in a slow retrieval of such maps from memory at runtime, and thus lead to less immersive gameplay experience due to an increase in lag experienced by users of the video game, a decrease in frame rate, and the like.

These issues may be mitigated or alleviated by implementing means for automatically generating, at runtime, texture/normal/occlusion maps for virtual elements not already having predefined maps associated therewith, the generation being based on data indicating the types of objects being represented by the virtual elements. This way, the number of predefined texture/normal/occlusion maps associated with in-game objects may be reduced or even eliminated, leading to fewer retrievals of predefined maps from memory at runtime, and thus leading to more immersive gameplay (an increased frame rate and/or decreased input lag during gameplay, for example).

### System

Accordingly, turning now to Figure 2, in embodiments of the present description, a system for generating mapping data to be applied to a surface of a virtual element comprises: receiving circuitry 200 configured to receive an instruction to render the virtual element; determining circuitry 202 configured to determine, in response to the instruction being received, whether the virtual element has mapping data associated therewith; obtaining circuitry 204 configured to obtain the mapping data if the virtual element has mapping data associated therewith, or else obtain object data indicating a type of object and/or material corresponding to the virtual element; generating circuitry 206 comprising one or more generating models trained to generate, based on the obtained object data (in the case that object data is obtained, otherwise the generating circuitry is not utilised), the mapping data to be applied to the surface of the virtual element; and applying circuitry 208 configured to apply the obtained or generated mapping data to the surface of the virtual element.

As a non-limiting example of the system in operation, a user may wish to play a video game. Accordingly, the user executes the game file of the video game using their games console or computer. However, one or more of the video games' virtual elements (virtual objects, virtual characters, parts of the virtual environment, and the like) to be rendered for display to the user may not have predefined texture maps, occlusion maps and/or normal maps (hereinafter referred to as "mapping data") associated therewith. Such virtual elements may instead have object data associated therewith; references to the term 'object data' should not be considered indicative of virtual elements being distinct objects, as it should instead be understood that an object may comprise a number of constituent virtual elements which can each be associated with respective object data.

At runtime, the system may receive an instruction to render a virtual element at receiving circuitry 200 and in response thereto, determining circuitry 202 may determine whether the virtual element has predefined mapping data associated therewith. In the event that the virtual element does have mapping data associated therewith (as determined by determining circuitry 202), obtaining circuitry 204 may obtain this mapping data (from a memory such as RAM 40, SSD 50, or the like). However, in the event that the virtual element does not have predefined mapping data associated therewith (as determined by determining circuitry 202), obtaining circuitry 204 may instead obtain the object data associated with the virtual element (from a memory such as RAM 40, SSD 50, or the like).

Object data associated with a given virtual element may provide an indication as to the type of object (or portion thereof) and/or material the given virtual element is supposed to depict. For example, the given virtual element may represent a shed, and so the associated object data may comprise a label/tag of "wood", "metal", "shed", "wooden shed", "metal shed", or the like; alternatively, different constituent elements of the shed may be identified, for instance using tags such as "shed roof" or "shed door". In other words, the tags may represent one or more identifying characteristics of an element which can be used to determine appropriate visual characteristics. Object data may comprise a plurality of tags which relate to different aspects of the element (such as an object type, construction material, and construction style); such data may also be provided in a narrative format (such as a textual description of the object), rather than specifically using tags.

Once the object data is obtained (in the event that no mapping data is associated with the virtual element), generating circuitry 206 may subsequently generate mapping data based thereon. More specifically, generating circuitry 206 may comprise (that is, execute) one or more generating models that have been trained to generate, based on the received object data associated with the shed virtual element, mapping data to be applied to the shed's surface. For example, the generated mapping data may depict wood panelling and/or corrugated metal sheet.

The generating models may be any suitable machine learning model/neural network, and may be trained using image data of real-world objects (real-world cabins, sheds, outhouses, for example), and/or (image data of) other virtual elements (virtual cabins, sheds, outhouses, from other video games, for example).

The generating models may be trained to generate the mapping data based on the geometry/topology of the virtual element. For example, the generating models may detect the presence/shapes/sizes of the walls and roof of the shed based on the provided geometry/topology (a mesh, point cloud, or the like), and subsequently generate mapping data whose shape/size corresponds to that of external surfaces of the shed virtual element, and/or depicts features which would appear in particular places on the shed virtual element (joins in the wood panelling at the corners of the shed, wooden shingles for the roof, for example).

The generating models may be trained to generate the mapping data based on whether at least part of the virtual element lies within a viewpoint of virtual camera disposed in the video game environment. For example, while the user plays the video game, the user may have oriented the in-game virtual camera such that the shed is not visible to the user, in which case the generating models do not generate the mapping data for the shed. However, when at least part of the shed becomes visible to the user (because the user reoriented the virtual camera), the generating models may thus generate the mapping data to be applied to the now-visible shed. Of course, predictions as to whether the virtual element will be become visible within a threshold period of time may additionally/alternatively be used to trigger the generation of the mapping data for the virtual element.

In any case, once the mapping data has been obtained by obtaining circuitry 204 (in the event that mapping data is associated with the virtual element) or generated by the generating models (in the event that mapping data is not associated with the virtual element), applying circuitry 208 may apply the mapping data to the shed virtual element, thereby giving the shed a more realistic appearance.

Thus, the lag experienced by the user playing the game may be reduced, and frame rate increased, as the present system enables mapping data to be generated in an on-the-fly manner for some (if not all) of the virtual elements of the game. This is due to a reduction in the number and/or frequency of memory retrievals of predefined mapping data from external sources (online games stores, physical disks, or the like) or internal sources (RAM, ROM, or the like), which can be slow relative to the described generation process.

### Receiving Circuitry 200

In embodiments of the present description, receiving circuitry 200 is configured to receive an instruction to render the virtual element. In embodiments of the present description, receiving circuitry 200 may comprise one or more data ports (such as data port 60, USB ports, Ethernet ^{®} ports, Wi-Fi ^{®} ports, Bluetooth ^{®} ports, or the like) and/or an I/O bus (such as bus 100, or the like).

As will be appreciated by persons skilled in the art, instruction to render the virtual element may comprise information identifying the virtual element. Moreover, the instruction to render the virtual element may be thought of as a signal to trigger the rendering of the virtual element. That is to say that in response to receiving the instruction, a rendering pipeline may execute rendering processing such as shading, colouring, texturing, and the like, on the virtual element's mesh/point to give the virtual element its in-game appearance. Regarding texturing, once the instruction is received at receiving circuitry 200, determining circuitry 204 may determine whether the virtual element (identified in the received instruction) has mapping data associated therewith, and thereby initiate the texturing process, for example,

### Determining Circuitry 202

In embodiments of the present description, determining circuitry 202 is configured to determine, in response to the instruction being received, whether the virtual element has mapping data associated therewith. In embodiments of the present description, determining circuitry 202 may be one or more CPUs 20 and/or one or more GPUs 30, for example.

This is to say that determining circuitry 202 may initially check whether any predefined mapping data exists for the virtual element before any runtime generation of mapping data for the virtual element is carried out. This way, a situation where two sets of mapping data (that is, both predefined and generated sets of mapping data) are associated with the virtual element may be prevented, as this would result in a redundant increase in computational expenditure by the system when texturing the virtual element; one of the sets of mapping data would be redundant for the purposes of texturing the virtual element, and so would the computational expenditure used to store/generate that set of mapping data. Of course, a single object may be associated with predefined mapping data and also have further mapping data generated in the case that different parts of the object are regarded as being different elements - such as the walls of a shed being a first element and the roof a second element.

Once the determination/check is carried out by determining circuitry 202, obtaining circuitry 204 may obtain the predefined mapping data associated with the virtual element (if said predefined mapping data exists), or obtain the object data associated with the virtual element (if said predefined mapping data does not exist).

### Obtaining Circuitry 204

In embodiments of the present description, obtaining circuitry 204 is configured to obtain the mapping data if the virtual element has mapping data associated therewith, or else obtain object data indicating a type of object and/or material corresponding to the virtual element. In embodiments of the present description, obtaining circuitry 204 may be one or more CPUs 20 and/or one or more GPUs 30, for example.

As mentioned previously, if virtual element does have mapping data associated therewith (as determined by determining circuitry 202), obtaining circuitry 204 may obtain this mapping data. However, if the virtual element does not have predefined mapping data associated therewith (as determined by determining circuitry 202), obtaining circuitry 204 may instead obtain the object data associated with the virtual element. The predefined mapping data or the object data may be retrieved from a memory such as RAM 40, SSD 50, or the like.

As mentioned previously, the object data may be associated with a given virtual element, and may provide an indication as to the type of object and/or material the given virtual element is supposed to depict. Turning back to the shed example, in which the shed is considered to be a single element, the object data associated with the shed may comprise a label/tag of "wood", "metal", "shed", "wooden shed", "metal shed", or the like.

Optionally, the object data may have object geometry data associated therewith, the object geometry data defining a geometry of at least part of the surface of the virtual element. The object geometry data may be in the format of a mesh, a point cloud, or the like, for example. Turning back to the shed example, the object geometry data of the shed may be a mesh defining the physical structure of the shed.

As will be appreciated by persons skilled in the art, this associated object geometry data may be used by the generating models to generate at least part of the mapping data. Turning back to the shed example, the generating models may generate, based on the object geometry data obtained by obtaining circuitry 204, a texture map whose shape/size corresponds to that of external surfaces of the shed virtual element, and/or depicts features which would appear in particular places on the shed virtual element (joins in the wood panelling at the corners of the shed, wooden shingles for the roof, for example).

Geometry-based generation of mapping data shall be discussed later herein.

Alternatively or in addition, the object data may optionally have game metadata associated therewith, the game metadata indicating a type and/or genre of a video game within which the virtual element is comprised.

Examples of types and/or genres of video games include single-player games, multi-player games, massively multi-player online (MMO) games, first person shooter (FPS) games, role-playing games (RPG), fantasy games, horror games, sports games, war/military games, and the like. As will be appreciated by persons skilled in the art, one or more of the above examples (and yet others not mentioned) may apply to a given video game. For example, a video game may be described as being an MMORPG fantasy game. In this case, the game metadata may comprise a label/tag of "MMO", "RPG", "fantasy", "MMORPG", "MMO fantasy", "RPG fantasy", "MMORPG fantasy", or the like.

As will be appreciated by persons skilled in the art, this associated game metadata may be used by the generating models to generate at least part of the mapping data. Turning back to the shed example, the game metadata associated with the shed may comprise a label/tag of "horror" because the video game within which the shed virtual element is comprised is a horror game. In this case, the generating models may generate, based on the game metadata obtained by obtaining circuitry 204, mapping data which, when applied to the surface of the shed, would make the shed look scary (a worn-down appearance, dark colours, or the like, for example).

Metadata-based generation of mapping data shall be discussed later herein.

Alternatively or in addition, where the virtual element is instantiated within a video game environment, the object data may optionally have object visibility data associated therewith, the object visibility data defining an orientation and/or position of the virtual element relative to that of a viewpoint of a virtual camera disposed within the video game environment.

Turning back to the shed example, the shed may be instantiated within the video game environment, and the user may be navigating their in-game character through this environment. While navigating the in-game character, the user may orient the virtual camera associated with this in-game character (a first person view, third person view, top down view, or the like) in order to view a desired portion of the video game environment. The object visibility data associated with the shed may therefore comprise the orientation and/or position of the shed (within the video game environment) relative to that of the virtual camera.

As will be appreciated by persons skilled in the art, this associated object visibility data may be used by the generating models to generate at least part of the mapping data. Turning back to the shed example, generating circuitry 206 may firstly determine, based on the object visibility data obtained by obtaining circuitry 204, whether or not at least part of the shed currently falls within the viewing frustum (viewpoint) of the virtual camera. In the case that generating circuitry 206 determines that at least part of the shed does fall within the viewing frustum of the virtual camera, the generating models may subsequently generating the mapping data for the shed. Of course, predictions as to whether the virtual element will be become visible within a threshold period of time (based on historical object visibility data, for example) may additionally/alternatively be used to trigger the generation of the mapping data for the virtual element.

Visibility-based generation of mapping data shall be discussed later herein.

Alternatively or in addition, obtaining circuitry 204 may be configured to optionally obtain input data indicative of a user prompt, that is, a user's desired outcome for the mapping data to be generated for the virtual element.

The user prompt may be a text prompt or voice prompt. For example, the user (in this case, a game developer, for example) may speak or write a statement such as "the shed is wooden", which may be used by the generating models at runtime to generate mapping data for the shed which depicts wooden textures for the surfaces of the shed. This way, game developers may influence the resulting textures, and thus ensure an immersive gameplay experience.

Prompt-based generation of mapping data shall be discussed later herein.

Alternatively or in addition, obtaining circuitry 204 may be configured to optionally obtain biometric data indicating a physiological state of a user. Examples of biometric data include heart rate, breathing rate, galvanic skin response, body temperature, or the like.

This biometric data may be used by generating circuitry 206 to determine a user's current emotions while playing a video game, and the generating models may generate mapping data based on the determined emotions. The user's current emotion may be expressed as emotion data, which may comprise valence and/or arousal values, for example.

This emotion data may be used by the generating models to generate mapping data which may cause a change in the user's emotional state. For example, the user may be feeling scared while playing a horror game. As such, the user's heart rate and breathing rate may increase, and they may begin to sweat. Biometric sensors (fitness trackers, cameras, microphones, and the like) may measure the user's heart rate, breathing rate, and galvanic skin response, and subsequently transmit these measurements as biometric data to obtaining circuitry 204.

Subsequently, generating circuitry 206 may generate valence and/or arousal values (emotion data) based on this biometric data, such valence and/or arousal valence indicating the user's fear (a negative valence value and a positive arousal value, for example).

The generating models may use this emotion data to generate mapping data which, when applied to a virtual element, would cause a change in the user's emotional state. For example, the generating models may generate mapping data for the shed which would make the shed appear less scary to the user (rather than having a run-down appearance and dark colours, the shed may have bright colours and a well-maintained appearance, for example).

Emotion-based generation of mapping data shall be discussed later herein.

In any case, the object data (and optionally any of the other types of data mentioned above) may be obtained by obtaining circuitry 204, and the generation of mapping data to be applied to a given virtual element may be carried out by the generating models based on the obtained data.

### Generating circuitry 206

In embodiments of the present description, generating circuitry 206 comprises one or more generating models that are trained to generate, based on the obtained object data, the mapping data to be applied to the surface of the virtual element. In embodiments of the present description, the generating models may be any suitable machine learning models/neural networks executed by the generating circuitry 206, which may be one or more CPUs 20 and/or one or more GPUs 30, for example.

It may be considered advantageous that the generation is performed by a GPU associated with the rendering process, such that the mapping data is generated in a cache at the GPU (thereby forgoing the need to load this from memory such as storage memory or RAM). Alternatively, the generation may be performed (at least in part) by other processing units (such as a CPU) with the results written to the GPU cache for use in the rendering process.

Mapping data is typically in the format of 2D images to be mapped onto the surface of a virtual element, thereby changing its appearance rendered. As mentioned previously, the mapping data may comprise one or more of:
- a texture map (these are typically used to apply colours, patterns, surface decoration onto the virtual element's surface);
- a normal map (these are typically used to depict surface deviations such as bumps and wrinkles on the virtual element's surface); and
- occlusion map (these are typically used to depict shadows on the virtual element's surface).

As mentioned previously, object data associated with a given virtual element may provide an indication as to the type of object and/or material the given virtual element is supposed to depict. As such, the generating models may be trained to generate mapping data which, when applied to the give virtual element's surface, would give the given virtual element an appearance which resembles the type of object and/or material it is supposed to depict.

Turning back to the shed example, the generating models may be trained to associate certain visual properties with certain types of objects and/or materials (brown colours and wood grain may be associated with wood, for example). Moreover, the object data associated with the shed virtual element may comprise a label/tag of "wooden shed". When this object data is input to the generating models, the generating models may subsequent generate a texture, normal and/or occlusion map which, when applied to the virtual element's surface, would give the virtual element's surface the appearance of a wooden shed (brown colours and wood grain, for example).

Where the object data has object geometry data associated therewith (mesh data, point cloud data, or the like), one or more of the generating models may generate at least part of the mapping data based on the object geometry data (as well as the object data); in other words, the generating models may be models which have been trained to utilise object geometry data as an input in the generation process.

As mentioned previously, the object geometry data defines the surface geometry of at least part of the virtual element. As such, the generating models may be trained to generate the mapping data based on one or more geometric/topological features present in the surface geometry of the at least part of the virtual element (that is, present within the object geometry data).

As a non-limiting example, the generating models may firstly identify one or more geometric/topological features by taking into account the gradient and/or curvature (that is, the first and/or second derivative, respectively) of the virtual element's surface geometry into account. It will be appreciated further derivatives may be used, as appropriate.

Turning back to the shed, the generating models may detect the walls of the shed as being distinct geometric features by detecting where discontinuities in the gradient of the shed's surface occur. For example, the sharp corners at which two adjacent walls of the shed meet may be detected as a discontinuity in the surface gradient, and thus the two surfaces either side of this detected discontinuity may be detected as being distinct geometric features of the virtual element.

Once the geometric features have been detected, the generating models may subsequently associate each feature with a structural feature (such as a wall, roof, door, window, floor, and the like). The generating models may do so by considering the relative locations, orientations, sizes, shapes, gradients and/or curvatures of the detected geometric features with respect to each other/the in-game environment.

Turning back to the shed example, the generating models may associate the two aforementioned surfaces with walls because of their generally perpendicular orientation with respect to the virtual ground on which the shed is disposed, and the generally flat nature of their surfaces. The generating models may similarly associate any identified geometric features disposed on top of these walls with a roof due to their angled orientation with respect to the walls and their location atop the walls.

Once the structural features have been associated with the geometric features, the selecting model may generate mapping data based on the structural feature (and optionally the surface geometry thereof). For example, the generating models may generating mapping data depicting wood panelling for the walls (the panels being oriented and wooden shingles for the roof.

Where the object data has game metadata associated therewith, one or more of the generating models may generate at least part of the mapping data based on the game metadata (as well as the object data); in other words, the generating models may be models which have been trained to utilise game metadata as an input in the generation process.

Turning back to the shed example, the generating models may be trained to associate certain visual properties with certain genres/types of video game (dark colours, dilapidated appearances of objects/buildings, blood spatter, and the like may be associated with horror games). Moreover, the game metadata associated with the shed may comprise a label/tag of "horror" because the video game within which the shed virtual element is comprised is a horror game. In this case, the generating models may generate, based on the game metadata obtained by obtaining circuitry 204, mapping data which, when applied to the surface of the shed, would make the shed look scary (a worn-down appearance, dark colours, or the like, for example).

Where the object data has object visibility data associated therewith, generating circuitry 206 may be configured to determine, based on the object visibility data, whether at least part of the virtual element currently lies within the viewpoint of the virtual camera disposed within the video game environment or will do so within a threshold period of time, and one or more of the generating models may be trained to generate at least part of the mapping data based on the determination.

Turning back to the shed example, the object visibility data may define an orientation and/or position of the virtual element relative to that of a viewpoint of a virtual camera disposed within the video game environment. As such, generating circuitry 206 may be configured to determine, based on the object visibility data obtained by obtaining circuitry 204, whether or not at least part of the shed currently falls within the viewing frustum (viewpoint) of the virtual camera.

In the case that generating circuitry 206 determines that at least part of the shed does fall within the viewing frustum of the virtual camera, the generating models may subsequently generating the mapping data for the shed. This way, the mapping data may be generated in a "just-in-time" manner, thereby reducing the likelihood of the generated mapping data being stored in RAM, ROM, or the like, prior to use at runtime, thus reducing the lag experienced by the user while playing the video game. That is to say that the mapping data may be generated on-the-fly and used immediately for a virtual element which is being displayed to the user, rather than needing to be stored for later retrieval.

Information about the mapping data that is generated may be stored for future use; this may be in the form of mapping data stored for a longer period, or in the form of parameters representing the generated mapping data so as to enable a streamlined and consistent generation of mapping data at a later time. This may be considered advantageous in the case in which a consistent rendering of content is deemed to outweigh the potential latency associated with accessing such stored information.

Of course, predictions as to whether the virtual element will be become visible within a threshold period of time (based on historical object visibility data, for example) may additionally/alternatively be used to trigger the generation of the mapping data for the virtual element.

Regarding such predictions, generating circuitry 206 may predict whether the shed will fall within the viewing frustum of the virtual camera within a threshold period of time. This may be achieved by taking into account not only the current orientations and/or positions of the virtual element (shed) and virtual camera, but also previous orientations and/or positions. For example, the object visibility data may comprise data indicating the historical orientations and/or positions of the virtual element and virtual camera over a period of time (which may or may not include the current orientations and/or positions of the virtual element and virtual camera).

These historical (and current) orientations and/or positions may have timestamps associated therewith, and generating circuitry 206 may determine, based on the historical (and current) orientations and/or positions and associated timestamps, a rate of change (a velocity, acceleration, jerk, or the like) of the orientations and/or positions of virtual element and/or viewpoint. Based on these rates of change, generating circuitry 206 may predict that at least a part of the virtual element will fall within the viewing frustum of the virtual camera within, say, 3 seconds (other threshold times may be used). Based on this prediction, the generating models may subsequently generate the mapping data for the shed. By the time the generation of the mapping data is complete (within 2.5 seconds of the initiation of the generation process, for example), said mapping data may be applied to the shed immediately, as it is highly likely to be visible within 0.5 seconds, for example.

The threshold time period may be predefined or user-defined, and may be immutable or dynamic in nature. The threshold time period may be defined on a per-element basis, defined based on the desired resolution of the resulting mapping data (higher resolution mapping data may take longer to generate, for example), or defined based on processing capabilities of the computer/console embodying the present disclosure (higher performance computers may take less time to generate the mapping data using the generating models, for example).

Where obtaining circuitry 204 is configured to obtain input data indicative of a user prompt, one or more of the generating models may be trained to generate at least part of the mapping data based on the received input data.

Turning back to the shed example, the user (in this case, a game developer, for example) may speak or write a statement such as "the shed is old and wooden". This statement may be associated with the shed's object data as a label/tag/metadata. At runtime, the generating models may perform a semantic analysis on this label/tag/metadata, and may subsequently to generate mapping data for the shed which depicts worn-down and/or silvered wood textures for the surfaces of the shed based on this semantic analysis. This way, game developers may influence the resulting textures, and thus ensure an immersive gameplay experience/a cohesive aesthetic for the video game environment.

Where obtaining circuitry 204 is configured to obtain biometric data indicating a physiological state of a user, generating circuitry 206 may be configured to generate emotion data based on the biometric data, the emotion data indicating an emotional state of the user, and one or more of the generating models may generate at least part of the mapping data based on the generated emotion data); in other words, the generating models may be models which have been trained to utilise emotion data as an input in the generation process.

The biometric data obtained from the user may be used to derive an indication of each users' emotional state. This is because the human body typically exhibits a physiological response to emotions. In the context of playing a video game, these emotions may arise from stimuli output from the video game and/or sources of user discomfort; in some cases, the stimuli may be causing the discomfort (current screen brightness may cause vision fatigue, for example). For example, when experiencing fear, the human body typically responds by increasing heart rate, increasing breathing rate, sweating, and the like. The biometric data gathered may comprise information regarding at least some aspects of their respective physiological responses to (parts of) the video game, which in turn may provide an indication of the emotional state of the user. Hence, more generally, biometric data may be thought of as data indicative of a given user's physiological response to (parts of) the video game.

The biometric data may comprise one or more of a galvanic skin response (changes in sweat gland activity and/or skin conductance), a heart rate, a breathing rate, a blink rate, a metabolic rate, video data (one or more images of a given user's face and/or body), and audio data (speech or other noises made by a given user).

The biometric data may be received from one or more of a fitness tracking device, a user input device (game controller, mouse, keyboard, or the like), a camera (standalone or comprised within a computer, head mounted display, TV, user input device, or the like), and a microphone (standalone or comprised within a computer, head mounted display, TV, user input device, or the like).

It should be noted that the preceding examples are not exhaustive; persons skilled in the art will appreciate that types of biometric data and types of devices operable to obtain and transmit a given user's biometric data other than those mentioned previously are considered within the scope of the present description.

In order to ascertain the current emotional state of a given user, the gathered biometric data may be used to generate the given user's emotion data. This current emotion data may come in the form of valence and/or arousal values, which, in essence, respectively indicate the (un)pleasantness and/or the intensity of the emotion currently being experienced by the given user. However, other alternative or additional forms of emotion data may be apparent to persons skilled in the art, yet it must be based on (that is, derived from) at least part of the gathered biometric data.

Generating circuitry 206 may generate current emotion data from a given user's biometric data by implementing some form of predetermined algorithm (an equation, for example) which may take into account the different types of biometric data received from the given user. Certain types of biometric data may be more strongly correlated with valence than arousal, and vice versa. Therefore, those types of biometric data that are more correlated with valence (such as, video data and audio data, for example) may be used to determine the valence value, and likewise those biometric data types that are more correlated with arousal (such as galvanic skin response and heart rate, for example) may be used to determine the arousal value. Some types of biometric data may be correlated with both valence and arousal. For example, breathing rate may be positively correlated with arousal and negatively correlated with valence, which would result in the user's emotion data indicating calmness when the breathing rate is low, and an upset emotion when the breathing rate is high.

It should be noted that the aforementioned correlations may only hold true in certain situations. People typically adopt a sitting positon when playing video games. As such, the aforementioned correlations may hold true in these circumstances. However, if a certain user is, say, moving while playing the game (for example, playing a virtual reality video game which utilises the given user's bodily motions, or the like), the aforementioned correlations may not hold true; the increased breathing rate of that certain user could not be relied upon as an indication that the user is scared due to a horror game. As such, and as will be appreciated by persons skilled in the art, other correlations would need to be devised which take into account the circumstances in which a given user is playing the video game.

Similarly also certain biometric data may correlate differently for different user demographics, including gender and age; for example younger players may change heart rate more rapidly, and/or by a greater amount than older players in response to the same stimulus and emotional response. Hence more generally the algorithm may optionally be specific to or calibrated for a given user, a particular environment or class of environment, and/or for particular levels or activities or classes thereof within the environment (e.g. being different during a death match game and during a matchmaking lobby where teams for the game are picked).

Alternatively or in addition to using equations/algorithms, machine learning models may be used in order to generate current emotion data from biometric data. This may be advantageous in that qualitative aspects of biometric data may be taken into account when generating the (typically quantitative) current emotion data. These qualitative aspects may be the meaning (semantics) of the words spoken by a user during gameplay (such words may be recognised using known speech recognition techniques), the cadence of a user's speech (which may not necessarily be qualitative, but the complex time-dependent nature of speech cadence may prove difficult to accurately take into account when using the aforementioned equations), determining the types of sounds uttered by the user (sobbing, screaming, whimpering, or the like), determining emotions from facial expressions, or the like.

Turning back to the shed example, the user may be feeling scared while playing a horror game comprising the shed virtual element. As such, the user's heart rate and breathing rate may increase, and they may begin to sweat. Biometric sensors (fitness trackers, cameras, microphones, and the like) may measure the user's heart rate, breathing rate, and galvanic skin response, and subsequently transmit these measurements as biometric data to receiving circuitry 200.

Subsequently, generating circuitry 200 may generate valence and/or arousal values (emotion data) based on this biometric data, such valence and/or arousal valence indicating the user's fear (a negative valence value and a positive arousal value, for example).

The generating models may use this emotion data to generate mapping data which, when applied to a virtual element, would cause a change in the user's emotional state. For example, , based on the knowledge that the user is scared, the generating models may generate mapping data for the shed which would make the shed appear less scary to the user (rather than having a run-down appearance and dark colours, the shed may have bright colours and a well-maintained appearance, for example).

One or more of the generating models may be trained using one or more sets of image data of one or more real-world objects. A given set of image data may be a single (still) image, or may be a sequence of two or more image frames depicting a moving image, for example. Each set of image data may depict a respective one or more real-world objects.

For each set of image data, the selecting model may be trained to identify the real-world objects depicted in the set, this identification being based on the visual appearances of the real-world objects. For example, a given set of image data may depict a wooden shed in a garden. This set of image data may be analysed by generating circuitry 206 or different processing circuitry (optionally, of a different computing system) using computer vision in order to identify the shed, for example.

The terms "computer vision algorithm" and "object recognition algorithm" refer to any suitable computer-implemented method, software, algorithm, or the like, which causes a computer (such as the apparatus described herein) to recognise/detect objects, animals, humans, or the like from captured images. Such algorithms are well-known in the art, examples of which include Viola-Jones detection methods (optionally based on Haar features), scale-invariant feature transforms (SIFTs), histogram of oriented gradients (HOG) features, and the like. Alternatively or in addition, machine learning and methods, neural networks, artificial intelligence, or the like may be used to recognise/detect objects and the like. Examples of neural network approaches include region based convolutional neural networks (R-CNNs), single shot multi-box detectors (SSDs), you only look once (YOLO) methods, single-shot refinement neural networks for object detection (RefineDets), Retina-Net, deformable convolutional networks, and the like.

Optionally, one or more of the sets of image data may have object metadata respectively associated therewith, wherein the object metadata associated with a given set of image data comprises an indication of one or more real-world objects depicted in the set of image data. For example, if a given set of image data is retrieved from a social media website/application, then the set of image data may have so-called "hashtags" associated therewith, where each hashtag may identify an object in the set of image data ("#shed #gardenshed", for example). These hashtags may aid in the identification of objects in the set of image data, as the hashtag may serve as *a priori* knowledge of there being one or more sheds depicted in the set of image data.

In any case, after the set of image data is analysed, the shed may be tagged (by a human or by generating circuitry 206). The tagged set of image data may then be input to one or more of the generating models.

The generating models may learn the typical visual appearances of sheds based on the tagged set of image data. This learning may enable the generating models, during operation, to generate mapping data to be applied to the shed, this mapping data having an appearance which imitates the typical visual appearances of sheds (as learnt from the tagged set of image data.

Alternatively or in addition, the selecting model may be trained using one or more other virtual elements (from other video games, films, or the like, for example) respectively having mapping data applied thereto.

For example, a set of one or more rendered images (that is, a set of image data) of a given other virtual element may be input to the generating models in order to train the generating models in a similar manner to that discussed with respect to using sets of image data of real-world objects.

Alternatively, both the object geometry data of the other virtual element and the mapping data applied thereto may be input to the generating models. That is to say that rather than using two-dimensional images of the virtual element, the surface geometry of the virtual element and the mapping data thereof may be used to train the generating models.

The generating models may thus learn a correlation between the geometry/topology of the other virtual element and the mapping data applied thereto. This learning may thus enable the generating models, during operation, to generate virtual elements based on the geometric/topological features comprised within the inputted object geometry data (if any is received) without having to attribute structural features to the geometric/topological features, for example.

As will be appreciated by persons skilled in the art, in order for one or more of the generating models to generate at least part of the mapping data based on object geometry data, game metadata, input data (user prompts) and/or emotion data, training datasets comprising such types of data may be used in a similar manner to that mentioned previously.

In the case of object geometry data, based on the aforementioned tagged set of image data, the generating models may learn the typical geometry/topology of sheds by taking into account the shape/size of the sheds in the set of image data. Moreover, the generating models may learn a correlation between the visual appearance and geometry/topology of the shed so that when object geometry data comprises a virtual element shaped in a similar manner to a shed, the mapping data generated may bear a resemblance to a shed.

In the case of game metadata, a training dataset may include tagged sets of image data depicting films/games of a certain type and/or genre (horror films, for example), the tags providing an indication of the type and/or genre of film/game. The generating models may learn a correlation between the visual appearance of objects in the tagged set of image data and the type and/or genre of film/game in which said objects appear. This way, when game metadata comprises a tag/label of "horror", for example, the mapping data generated may depict surfaces/objects whose appearances align with those found in horror films.

Of course, rather than game metadata being provided it may be considered appropriate in some implementations to train a generating model for a specific game based upon pre-generated assets associated with the game. This can simplify the generation process in that the number of tags can be reduced; this can also reduce the likelihood of erroneous mapping data being generated, such as a modern shed in a game which is set in the past.

In the case of input data, a training dataset may include tagged sets of image data of real-world (or virtual) objects, the tags comprising a description of the image data by a user ("wooden shed in a garden"), for example. In the case of emotion data, a training data may include tagged sets of image data of real-world (or virtual) objects, the tags comprising a valence and/or arousal value of a user in response to seeing the image data. In these cases, similar correlations to those discussed previously may be learnt by the generating models.

Optionally, one or more of the generating models may each be trained to generate at least part the mapping data by generating a latent space based on training data input thereto, and selecting, based on the object data, one or more latent variables from the generated latent space, each latent variable being associated with a characteristic of the at least part of the mapping data to be applied to the surface of the virtual element.

As will be appreciated by persons skilled in the art, a latent space is an embedding of items (sets of image data, for example) within a manifold in which items with greater resemblance to each other are positioned closer together than those with less resemblance. A given position within this latent space may be defined by a set of coordinates typically known as latent variables. Each coordinate/latent variable is typically associated with a parameter/characteristic of the items embedded therein (size, colour, and the like).

Types of machine learning models that are capable of generating latent spaces include Word2Vec, GloVe, Siamese Networks, Variational Autoencoders, and the like.

As an example of the latent space being generated, tagged sets of image data may be input to the generating models. Some of the sets of image data may depict sheds, some may depict skyscrapers, and some may depict houses. A given generating model may generate a latent space in which the shed image sets are closer together than they are to the skyscraper and house image sets. Thus a given region of the latent space may be associated with sheds. During operation, object data comprising a label of "shed" may be input to the generating model, and this generating model may select latent variables falling within the "shed" region of the latent space in order to obtain image data from which mapping data depicting the wood grain and brown colours of wood may be generated, for example. It should be noted that the selected latent variables do not necessarily have to coincide with those of an item (set of image data) having been embedded within the latent space. Rather, where the selection of latent variables does not coincide so, the data obtained from the latent space may be an interpolation of the items embedded within the latent space (an interpolation of the shed image sets, for example).

Optionally, the object data may have object variable data associated therewith, the object variable data defining one or more candidate latent variables; and the generating models which comprise a generated latent space may be trained to select one or more of the latent variables based on the object variable data, and thereby generate the at least part of the mapping data. For example, the associated object variable data may specify a range of values for each of one or more of the latent variables/coordinates of the latent space, and the generating models may select latent variables falling within these specified ranges.

In any case, the generating models are trained to generate the mapping data to be applied to the surface of the virtual element by applying circuitry 208 based on the object data obtained by obtaining circuitry 204 (and optionally any datasets associated with the object data such as object geometry data, game metadata, object visibility data, user prompts, biometric data, or the like).

### Applying circuitry 208

In embodiments of the present description, applying circuitry 208 is configured to apply the obtained or generated mapping data to the surface of the virtual element. In embodiments of the present description, applying circuitry 208 may be one or more CPUs 20 and/or one or more GPUs 30, for example.

As will be appreciated by persons skilled in the art, the term "apply" and derivatives/declensions thereof refer to the mapping of the mapping data to the surface of a virtual element such that the mapping data imparts visual characteristics to the virtual element.

That is to say that applying circuitry 208 applies whichever of the predefined (that is, obtained) mapping data and the generated mapping data is available to the surface of the virtual element in order that the virtual element may take on a more realistic/interesting appearance when rendered for display to the user.

Hence, it will be appreciated that embodiments of the present description may comprise rendering circuitry configured to render, for display, at least part of the virtual element having the obtained or generated mapping data applied thereto.

Optionally, receiving circuitry 200 may be configured to receive one or more control signals for performing one or more changes to the instantiated virtual elements, applying circuitry 208 may be configured to perform the one or more changes to the applied mapping data based on the received control signal, and one or more of the generating models may be trained using one or more of the changes performed by applying circuitry 208.

That is to say that the application of mapping data to virtual elements need not be immutable, but rather may be subject to any further changes that a user (such as a game developer) may wish to carry out in order to obtain a more desirable appearance for the virtual element at runtime. That is to say that game developers may influence the appearances of the mapping data output by the generating models at runtime, and thus ensure an immersive gameplay experience.

As will be appreciated by persons skilled in the art, a given change to the virtual element carried out by applying circuitry 208 in response to one or more of the control signals received at receiving circuitry 200 may be a changing of the size, shape, colour, surface pattern, and the like, of the virtual element in question.

The control signals received at receiving circuitry 200 may be received from one or more of:
- a user input device (a game controller, mouse, keyboard, mobile phone, or the like);
- a camera (standalone or comprised within a computer, mobile phone, head mounted display, TV, user input device, or the like); and
- a microphone (standalone or comprised within a computer, mobile phone, head mounted display, TV, user input device, or the like).

It should be noted that the preceding examples are not exhaustive; persons skilled in the art will appreciate that types of devices operable to transmit user inputs to receiving circuitry 200 other than those mentioned in the above list are considered within the scope of the present description.

Subsequently, the generating models may be trained using one or more of the changes performed by applying circuitry 208. That is to say that the changes made by the developer may be used as feedback in order to further train the generating models to generate mapping data that is more appropriate for the video game.

Turning to the shed example, during game development, the generating models may generate mapping data depicting brickwork for the shed. The user (developer) may wish to change this mapping data such that it depicts woodwork instead because sheds are more likely to be made of wood than brick. Therefore, the user may provide control signals to receiving circuitry 200, and, based thereon, applying circuitry 208 may subsequently change the mapping data for the shed. Data pertaining to these manual changes may be sent to the generating models so that they may be trained to refrain from generating brickwork mapping data for sheds in future.

In any case, embodiments of the present description seek to reduce runtime lag and increase runtime frame rate of video games by providing an automatic generation of texture/normal/occlusion maps for some (if not all) virtual elements at runtime based on data indicating the types of objects being represented by the virtual elements.

### Method

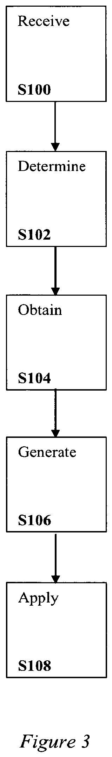

Turning now to Figure 3, a method of generating mapping data to be applied to a surface of a virtual element comprises the following steps.

S100: receiving an instruction to render the virtual element, as described elsewhere herein.

S102: determining, in response to the instruction being received, whether the virtual element has mapping data associated therewith, as described elsewhere herein.

S104: obtaining the mapping data if the virtual element has mapping data associated therewith, or else obtaining object data indicating a type of object and/or material corresponding to the virtual element, as described elsewhere herein.

S106: generating, using one or more trained generating models, based on the received object data, the mapping data to be applied to the surface of the virtual element, as described elsewhere herein.

S108: applying the obtained or generated mapping data to the surface of the virtual element, as described elsewhere herein.

It will be apparent to a person skilled in the art that variations in the above method corresponding to operation of the various embodiments of the apparatus as described and claimed herein are considered within the scope of the present invention.

It will be appreciated that the above methods may be carried out on conventional hardware (such as entertainment device 10) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for applying mapping data to a surface of a virtual element, comprising:
receiving circuitry configured to receive an instruction to render the virtual element;
determining circuitry configured to determine, in response to the instruction being received, whether the virtual element has mapping data associated therewith;
obtaining circuitry configured to obtain the mapping data if the virtual element has mapping data associated therewith, or else obtain object data indicating a type of object and/or material corresponding to the virtual element;
generating circuitry comprising one or more generating models which generate, based on the obtained object data, the mapping data to be applied to the surface of the virtual element; and
applying circuitry configured to apply the obtained or generated mapping data to the surface of the virtual element.

2. A system according to claim 1, wherein:
the object data has object geometry data associated therewith, the object geometry data defining a geometry of at least part of the surface of the virtual element; and
one or more of the generating models generate at least part of the mapping data based on the object geometry data.

3. A system according to claim 1 or claim 2, wherein:
the object data has game metadata associated therewith, the game metadata indicating a type and/or genre of a video game within which the virtual element is comprised; and
one or more of the generating models generate at least part of the mapping data based on the game metadata.

4. A system according to any preceding claim, wherein:
the virtual element is instantiated within a video game environment;
the object data has object visibility data associated therewith, the object visibility data defining an orientation and/or position of the virtual element relative to that of a viewpoint of a virtual camera disposed within the video game environment;
the generating circuitry is configured to determine, based on the object visibility data, whether at least part of the virtual element currently lies within the viewpoint of the virtual camera disposed within the video game environment or will do so within a threshold period of time; and
one or more of the generating models are trained to generate at least part of the mapping data based on the determination.

5. A system according to any preceding claim, wherein:
the obtaining circuitry is configured to obtain input data indicative of a user prompt; and
one or more of the generating models are trained to generate at least part of the mapping data based on the received input data.

6. A system according to any preceding claim, wherein:
the obtaining circuitry is configured to obtain biometric data indicating a physiological state of a user;
the generating circuitry is configured to generate emotion data based on the biometric data, the emotion data indicating an emotional state of the user; and
one or more of the generating models generate at least part of the mapping data based on the generated emotion data.

7. A system according to any preceding claim, wherein one or more of the generating models are trained using one or more sets of image data of one or more real-world objects.

8. A system according to any preceding claim, wherein one or more of the generating models are trained using one or more other virtual elements respectively having mapping data applied thereto.

9. A system according to any preceding claim, wherein:
the receiving circuitry is configured to receive one or more control signals for performing one or more changes to the applied mapping data; and
the applying circuitry is configured to perform the one or more changes to the applied mapping data based on the received control signals; and
one or more of the generating models are trained using one or more of the changes performed by the applying circuitry.

10. A system according to any preceding claim, wherein one or more of the generating models are each trained to generate at least part the mapping data by:
generating a latent space based on training data input thereto; and
selecting, based on the object data, one or more latent variables from the generated latent space, each latent variable being associated with a characteristic of the at least part of the mapping data to be applied to the surface of the virtual element.

11. A system according to claim 10, wherein:
the object data has object variable data associated therewith, the object variable data defining one or more candidate latent variables; and
the generating models which comprise a generated latent space are trained to select one or more of the latent variables based on the object variable data, and thereby generate the at least part of the mapping data.

12. A system according to any preceding claim, wherein the generated mapping data comprises one or more of:
i. a texture map;
ii. a normal map; and
iii. an occlusion map.

13. A method of generating mapping data to be applied to a surface of a virtual element, comprising:
receiving an instruction to render the virtual element;
determining, in response to the instruction being received, whether the virtual element has mapping data associated therewith;
obtaining the mapping data if the virtual element has mapping data associated therewith, or else obtaining object data indicating a type of object and/or material corresponding to the virtual element;
generating, using one or more trained generating models, based on the received object data, the mapping data to be applied to the surface of the virtual element; and
applying the obtained or generated mapping data to the surface of the virtual element.

14. A computer program comprising computer executable instructions adapted to cause a computer system to perform the method of claim 13.

15. A non-transitory, computer-readable storage medium having stored thereon the computer program of claim 14.
